# EUROPEAN PATENT SPECIFICATION

(11) **EP 3 370 581 B1**
(45) Date of publication and mention of the grant of the patent: **03.06.2020**
(21) Application number: 16795251.4
(22) Date of filing: 31.10.2016
(51) Int. Cl.: A47J 31/06, A47J 31/52

(54) **CAPSULE HOLDER FOR A BEVERAGE PREPARATION MACHINE, BEVERAGE PREPARATION MACHINE COMPRISING SAID CAPSULE HOLDER**
KAPSELHALTER FÜR EINE GETRÄNKEZUBEREITUNGSMASCHINE, GETRÄNKEZUBEREITUNGSMASCHINE MIT BESAGTEM KAPSELHALTER
SUPPORT DE CAPSULE POUR UNE MACHINE DE PRÉPARATION DE BOISSONS, MACHINE DE PRÉPARATION DE BOISSON COMPRENANT LEDIT SUPPORT DE CAPSULE

(30) Priority: 05.11.2015 EP 15193251
(43) Date of publication of application: 12.09.2018
(73) Proprietor: Société des Produits Nestlé S.A., 1800 Vevey (CH)
(72) Inventor: ROGNON, Vincent, 1350 Orbe (CH)
(86) International application number: PCT/EP2016/076260
(87) International publication number: WO 2017/076816

(56) References cited:
- EP-A1- 0 280 594
- EP-A1- 2 071 986
- EP-A1- 2 612 579
- AU-A1- 2012 238 273
- AU-A1- 2012 238 276
- AU-A1- 2012 238 276
- US-B1- 6 479 086

## Description

### Field of the invention

The present invention concerns a food or beverage preparation machine, in particular a home appliance. It relates more particularly to a beverage preparation machine such as coffee preparation machine using any pre-portioned beverage ingredient within enclosing packaging.

Although the invention is hereafter generally described in reference to the example of a coffee machine using capsules, it should be understood that the invention relates to any beverage preparation machine. In particular, a "beverage" is meant to include any liquid food, such as tea, coffee, hot or cold chocolate, milk, soup, baby food or the like. A capsule is meant to include any pre-portioned beverage ingredient within enclosing packaging of any material, in particular air tight packaging, e.g. plastic, aluminium, recyclable and/or bio degradable packaging, and of any shape and structure, including soft pods or rigid cartridges containing an ingredient.

### Background of the invention

Certain beverage preparation machines use capsules containing ingredients (e.g. ground coffee) to be extracted or to be dissolved.

Said capsules are generally employed along with a beverage machine adapted for their use. Such machines are generally provided with means for storing and heating water, introducing the heated water into the capsule to create a beverage, and dispensing the beverage into a container for consumption.

The beverage may be prepared by inserting a capsule into the beverage machine. More particularly, the machine comprises a receptacle for accommodating said capsule and a fluid injection system for injecting a fluid, preferably water, under pressure into the capsule. The part of the machine forming said receptacle is called "capsule holder". A capsule holder for holding a capsule is intended to be inserted in and removed (completely or partially) from a corresponding cavity or receptacle of the machine. When a capsule holder is loaded with a capsule and inserted within the machine in a functional manner, the water injection means of the machine can form a fluid connection with the capsule to inject water therein for food or beverage preparation. A capsule holder was described for example in applicant's European patent EP 1967100 B1**,** and document AU 2012 238 276 A1 discloses a filter assembly for holding coffee powder.

Thus, the principle of extracting and/or dissolving the contents of a closed capsule under pressure consists typically of inserting the capsule into a receptacle or cavity of a machine, injecting a quantity of pressurized water into the capsule, generally after piercing a face of the capsule with a piercing injection element such as a fluid injection needle mounted on the machine, so as to create a pressurized environment inside the capsule either to extract the substance or dissolve it, and then release the extracted substance or the dissolved substance through the capsule. Capsules allowing the application of this principle have already been described for example in applicant's European patents EP 1472156 B1**,** and EP 1784344 B1**.**

Water injected under pressure into the capsule, for the preparation for example of a coffee beverage, is preferably hot, that is to say at a temperature above 70°C. However, in some particular instances, it might also be at ambient temperature, or even chilled. The pressure inside the capsule chamber during extraction and/or dissolution of the capsule contents is typically about 1 to about 8 bar for dissolution products and about 2 to about 12 bar for extraction of roast and ground coffee.

Machines allowing the application of this principle have already been described for example in patents CH 605 293 and EP 242 556**.** According to these documents, the machine comprises a receptacle or cavity for the capsule and a perforation and injection element made in the form of a hollow needle comprising in its distal region one or more liquid injection orifices. The needle has a dual function in that it opens the top portion of the capsule and in that it also forms the water inlet channel into the capsule.

The machine further comprises a fluid tank - in most cases this fluid is water - for storing the fluid that is used to dissolve and/or infuse and/or extract under pressure the ingredient(s) contained in the capsule. The machine comprises a heating element such as a boiler or a heat exchanger, which is able to warm up the water used therein to working temperatures (conventionally temperatures up to 80-90°C). Finally, the machine comprises a pump for passing the water from the tank to the capsule, optionally through the heating element.

Fluid (e.g. water) is pumped until the user manually stops the operation of the machine, or until a predefined quantity has been measured by a flow meter embedded in the machine.

However, some drawbacks still exist in the known systems. First, manual systems are simple and efficient, and make it possible to deliver the desired quantity of beverage, but they lack the advantages of an automatic stop for the beverage delivery. Automatic systems are more expansive than manual ones. However, when a customer has bought a manual machine, it may not be easily upgraded to an automatic one. In addition, automatic machines are often complex and bulky. There is a need for a beverage machine having so-called "flow stop" characteristics (i.e. able to stop automatically when a predefined amount of beverage has been delivered into the cup), that is less expensive, less bulky, and more reliable than the existing machines.

More generally, the purpose of the invention is to provide a simple and reliable solution for consumers to upgrade their manual machines into automated ones, whereby at least one operating parameter, preferably at least the volume of prepared beverage, can be automated, in such a way that the machine automatically stops once the desired volume of beverage has been delivered to the cup.

### Summary of the invention

The objective set out above is met with a capsule holder for a beverage preparation machine, said capsule holder comprising a cavity for receiving an ingredient capsule for beverage preparation, the capsule holder comprising communication means for communicating with a main assembly of a beverage preparation machine adapted to receive said capsule holder. The communication means has a variable element, and the capsule holder comprises electronic circuitry configured to set a state of the variable element.

The communication means makes it possible to provide to the rest of a beverage preparation machine a signal according to which an operating parameter of the machine may be based. For example, when the desired quantity of beverage has been delivered, the beverage delivery may be stopped.

According to an embodiment, the variable element may be a position or an intensity of a magnetic field, the communication means comprising either:
- a movable permanent magnet and an actuator configured to move said permanent magnet; or
- an electromagnet whose excitation generates a magnetic field.

In another embodiment, the variable element of the communication means comprises a mobile mechanical piece, the position of said mobile mechanical piece defining its state.

The capsule holder according to the invention comprises a flow meter. **According to the invention, the** flow meter **is** an optical sensor configured to detect the width of a fluid flow at an outlet opening of the capsule holder.

The capsule holder may comprise a reception module configured to receive data from an external flow-meter assembly.

The electronic circuitry may be configured to change the state of the variable element upon reception of a signal that a predefined fluid quantity has been delivered.

The capsule holder may comprise one of a scrolling wheel, a capacitive button or buttons, or a mechanical button for manually adjusting a fluid quantity to be delivered.

The invention also relates to a beverage preparation machine having at least one operating parameter and comprising a main assembly and a capsule holder as previously described, wherein the main assembly comprises a sensor for detecting the state of the variable element of the communication means of the capsule holder and wherein the main assembly is configured to set an operating parameter based on said state of the variable element.

At least one state of the variable element causes the same output from the sensor as an absence of the capsule holder.

The set operating parameter is the operation of a fluid pump for fluid injection into the capsule holder, and the beverage preparation machine may be configured to stop the operation of the fluid pump upon detection of a given state of the variable element.

The beverage preparation machine **is** configured to stop the operation of the fluid pump upon detection of the absence of the capsule holder.

**According to** the invention, the main assembly **comprises** a light source and an optical sensor, wherein the mobile mechanical piece of the capsule holder is a light reflector configured to reflect light from the light source to the light sensor in a first state and impairs transmission of light from the light source to the sensor in a second state causing the same output from the sensor as an absence of the capsule holder.

In an embodiment where the capsule holder comprises a reception module configured to receive data from an external flow-meter assembly, the external flow meter assembly may be comprised in a fluid tank of the beverage preparation machine.

### Brief description of the drawings

Additional features and advantages of the present invention are described in, and will be apparent from, the description of the presently preferred embodiments which are set out below with reference to the drawings in which:
**Figure 1** is a general view of an example of a beverage preparation machine comprising a capsule holder;
**Figure 2** is a schematic view in three dimensions of a capsule holder;
**Figure 3** is a schematic sectional view of a capsule holder according to an embodiment of a first aspect of the invention.

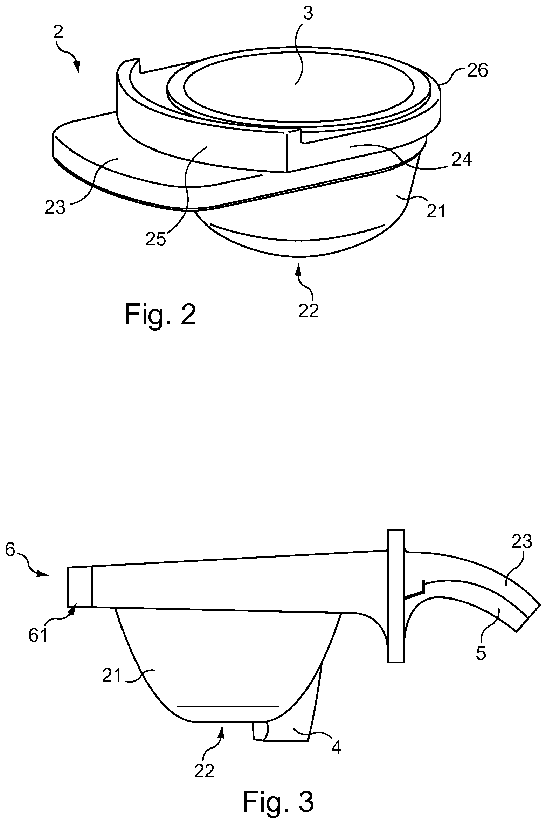

**Figure 3** is a schematic view in three dimensions of a capsule holder according to another embodiment of a first aspect of the invention.

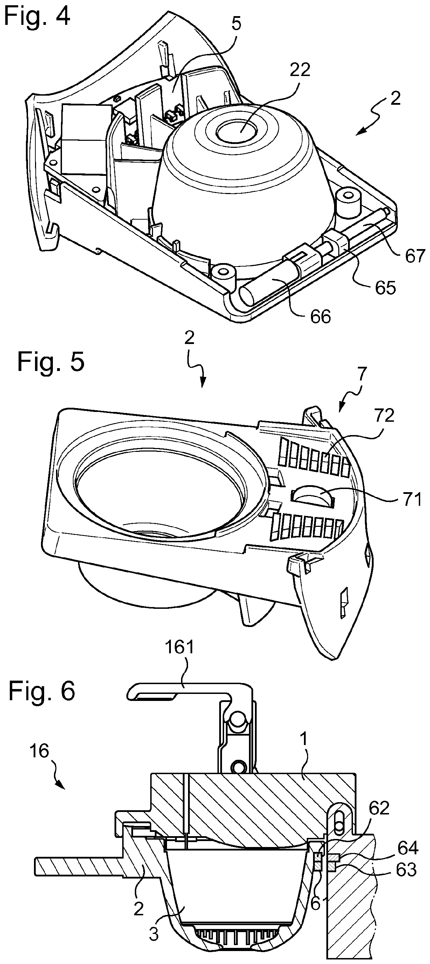

**Figure 5** is a schematic detail view of a system for adjusting the given fluid quantity to be delivered, provided in an example embodiment of the first aspect of the invention.
**Figure 6** is a schematic partial sectional view of the head of a beverage preparation machine according to an embodiment of a second aspect of the invention.

### Detailed description of the invention

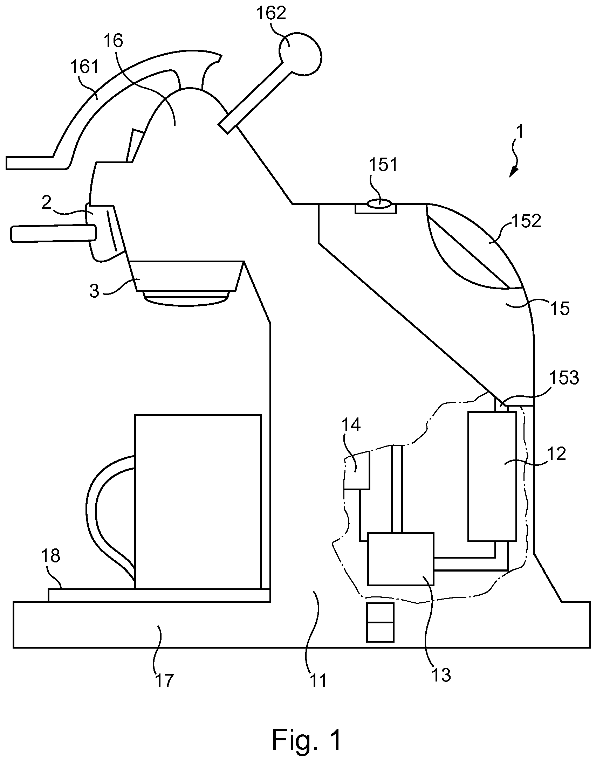

**Figure 1** shows in side view a beverage preparation machine of a type which may be implemented in the present invention.

The beverage preparation machine shown in Figure 1 comprises a main assembly 1 and a capsule holder 2 removable from the main assembly in which it is inserted and held.

The main assembly comprises a housing 11 containing a heater 12, a pump 13 and control means 14. Further, the device comprises a fluid tank 15, an extraction head 16 and a base 17 which is preferably provided with feet for standing the device thereon in a stable manner. The device further comprises a stand 18 for a receptacle such as a cup, having an upper surface preferably provided with a grid on which the receptacle is positioned.

The fluid tank 15 is provided in order to supply liquid such as water to the heater 12 and the pump 13, and hence to the extraction head 16 and an injection member (not shown in Figure 1). Preferably, the fluid tank 15 is connected to the rest of the main assembly 1 in a detachable manner and has an inlet 151 in order to fill it with liquid.

The fluid tank 151 may be provided with a handhold 152 for facilitating its handling. An outlet 153 which is preferably situated at the bottom of the fluid tank 15 enables a fluid connection between the reservoir 15 and the fluid pipe system of the beverage preparation machine.

The extraction head 16 of the beverage preparation machine comprises a closing mechanism 161 for selectively enclosing a capsule 3 provided to the device in the capsule-holder 2, and a control lever 162 for selectively supplying either cold or hot water to the extraction head 16 and hence to the capsule 3.

Thereby, the control lever 162 is connected at least to the control means 14 (e.g. circuitry configured to control the functions of the beverage preparation machine) comprised in the main assembly 1 of the beverage preparation machine. By moving the control lever 162, a user can choose whether to provide cold or hot water to the capsule provided to the device in order to prepare a cold or hot beverage.

As represented in Figure 1, a capsule-holder 2 is inserted into an aperture of the extraction head 16. After the capsule 3 has been placed in the capsule holder 2 and the capsule holder has been placed in the corresponding aperture of the main assembly 1 of the beverage preparation machine, the head 16 is closed to clamp the capsule holder 2 containing the capsule 3 by actuating the closing mechanism 161.

Details of a capsule holder 2 are represented in **Figure 2****.** The capsule-holder 2 may for example comprise holding means for a capsule forming a cup 21 with a bottom with an inner shape complementary to the shape of the capsule 3, and comprising an outlet 22 for allowing the beverage to be released from the bottom of the capsule.

The capsule holder 2 comprises a handle 23 to enable a convenient handling.

The capsule holder represented in Figure 2 has a general shape forming side guiding means 24 for guiding the insertion of the capsule-holder in the aperture of the main assembly 1 of the beverage preparation machine.

Furthermore, the capsule-holder 2 of Figure 2 includes a front cover 25, which covers the aperture when the capsule-holder is inserted into said aperture.

In other embodiments of the invention, the capsule holder may be designed to receive another kind or other kinds of package containing an ingredient for beverage preparation such as a sachet, or any other suitable package containing said ingredient.

**Figure 3** is a schematic sectional view of a capsule holder 2 according to an embodiment of a first aspect of the invention. The capsule holder 2 comprises, in the represented embodiment a flow meter 4. The flow meter 4 is situated as close as possible to the outlet 22 of the capsule holder, i.e. to the outlet of the cavity of the capsule holder 2 configured to receive the capsule 3. This makes it possible to measure the quantity of beverage actually delivered, not the quantity of fluid (typically water) pumped by the beverage preparation machine. In addition, this makes possible a direct measure of the flow of the delivered product, which is basically more accurate than an indirect measure based on the quantity of fluid pumped as performed on the prior art machines.

Such location of the flowmeter is also space-saving. Indeed, the flowmeters currently used on the beverage preparation machine require a large space inside the machine not only due to the size of this component, but also because of the configuration that the incoming pipe must take to ensure flow-meter measurement will be sufficiently accurate. This may require providing an additional pipe into the machine.

The flow meter 4 comprises a contactless sensor, which according to the invention is an optical system configured to detect the width of the flow at the capsule outlet. In an alternative example not covered by the present claims, the flow meter may be an ultrasonic sensor that emits an ultrasonic wave and then acquires a reflected signal. The sensor may also be a temperature and humidity sensor used as flow meter. In a further example not covered by the present claims, the contactless temperature and humidity sensor is a capacitive sensor. An optional temperature measurement may be done with an infrared sensor. The use of a contactless sensor makes it possible to measure the flow at the outlet of the capsule holder without any contact with the dispensed fluid before it is poured into the cup. This is clean, and avoids cross-contamination of one product, by the preceding product that was prepared with the same machine.

In another embodiment, the capsule holder may be provided with a reception module for wireless communication with a flow meter comprised in the fluid tank 151. In this embodiment, a flow meter comprised in a flow meter assembly comprising a transmission module communicates the volumes of pumped fluid exiting from fluid tank 151 to the reception module of the capsule holder.

In another embodiment, the volume of delivered fluid is estimated based on the operation time of the fluid pump 13. The impact of scaling on the flow rate may be taken into account in the estimation of the quantity of fluid delivered.

Regarding the optional measure of the fluid temperature, by using a contactless temperature sensor, a direct temperature measurement of the fluid is performed, which is more accurate than the temperature measurement performed on the prior art beverage preparation machines. Indeed, the temperature of the beverage is generally measured indirectly by measuring the temperature of an aluminum mass heated for heating the water pipes. This leads to poor measurement accuracy because of the mass inertia of the aluminum and the several materials that the heat must cross before reaching the temperature sensor.

In the embodiment shown in Figure 3, the capsule holder 2 also comprises circuitry, typically provided on a printed card board (PCB) 5, able to receive data from the flowmeter comprised in the capsule holder 2 or in the fluid reservoir 151. More particularly, the PCB 5 is configured to obtain from the flow meter the quantity of beverage delivered.

The capsule holder 2 also comprises communication means 6 for communicating with the main assembly 1 of the beverage preparation machine which is adapted to receive it.

More particularly, the communication means of the capsule holder has a variable element, adapted to take at least two states. The electronic circuitry of the PCB 5 is configured to set the state of the variable element. The state of the variable element may be detected by a sensor of the main assembly of a beverage preparation machine, to set an operating parameter of the beverage preparation machine.

The variable element may be of various types. The variable element may be the position or the intensity of a magnetic field. The variable element may more generally be the emission or absence of emission of a signal (e.g. optic, acoustic, etc.) by the capsule holder. The variable element may be position of a mobile mechanical piece of the capsule holder, or a data based on said position of a mobile mechanical piece. For example, the mobile mechanical piece may be a light reflector configured to reflect or not (depending on its state) a light emitted by a light source of the main assembly of the beverage preparation machine to a light sensor of said main assembly of the beverage preparation machine. According to another example, the mobile mechanical piece may be configured to engage a part of the main assembly of the beverage preparation machine in a state and not in another state.

The invention is more particularly exemplified in the accompanying Figures in embodiments in which the variable element is the position or intensity of a magnetic field.

In a general manner, the communication means 6 enable an interaction, i.e. an exchange of information such as a signal of presence of the capsule holder, between the capsule-holder 2 and the main assembly 1.

For example, the communication means 6 comprises, in the embodiment represented in **Figure 3****,** an electromagnet 61.

The electromagnet 61 may be detected, when active (i.e. powered, resulting in a non-zero magnetic field intensity), by a magnetic field sensor - such as for example a Reed-sensor - comprised in the main part 1 of the beverage preparation machine, not visible in Figure 3.

In the represented embodiment of the invention, the PCB 5 is configured to control the energizing of the electromagnet 61. For example, the PCB may energize the electromagnet as long as a predefined quantity of beverage has not been delivered, i.e. has not been metered by the flow meter 4. The energy for energizing the electromagnet may be provided by the main assembly 1, or more likely by a battery comprised in the capsule holder 2 (e.g. on the PCB 5).

According to another example represented in **Figure 4****,** the communication means 6 comprises a permanent magnet 65, and an actuator configured to move said permanent magnet. The actuator comprises, in the represented embodiment, a motor 66 configured to rotate a worm gear 67 on which is installed the permanent magnet 65. The rotation of the worm gear 67 causes a translation of the permanent magnet 65. This changes the position of a magnetic field emitted by the capsule holder.

The permanent magnet 65 may be detected by a magnetic field sensor - such as for example a Reed-switch of a Reed-sensor - comprised in the main part 1 of the beverage preparation machine, not visible in Figure 3, when said permanent magnet 65 is in a range of position corresponding to the spatial range of detection the magnetic field sensor. The PCB 5 may control the operation of the motor 66 to set the position of permanent magnet 65 to make it detectable or undetectable by the Reed-sensor.
The energy for powering the motor 66 may be provided by the main assembly 1, or more likely by a battery comprised in the capsule holder 2 (e.g. on the PCB 5).

In the represented embodiments of a capsule holder of Figure 3 or Figure 4, and as shown in **Figure 5****,** a system for adjusting the given fluid quantity to be delivered 7 may be provided. The system for adjusting the given predefined fluid quantity to be delivered 7 is, in the example embodiment of Figure 5, provided on the handhold 23 of the capsule holder 2. It may comprise for example a rotatable button 71, and an indicator 72 of the selected quantity of beverage to deliver. The indicator 72 has, in the represented embodiment, the form of superposed bars having an increasing width. Many other graphical representations may be used, or alternatively a number indicator (whether or not associated with a volume unit).

**Figure 6** is a schematic partial sectional view of the head of a beverage preparation machine according to an embodiment of a second aspect of the invention.

The beverage preparation machine which is partially represented in Figure 5 comprises a main assembly 1 and a capsule holder 2 according to an embodiment of the first aspect of the invention, said capsule holder 2 being removable from the main assembly in which it is inserted and held.

In the represented embodiment, the communication means between the capsule holder 2 and the main assembly 1 comprise an electromagnet 61, potentially provided with encoding means 62 comprised in the capsule holder, and a magnet 63 potentially provided with a decoding means 64. The magnet 63 may be an electromagnet or a magnet of any other sort (e.g. a permanent magnet).

The decoding means 64 makes it is possible to transmit information such as a code or signal for example from the capsule-holder 2 inserted into the aperture of the main assembly 1 of the beverage preparation machine.

Hence, the decoding means 64 of the device may for example read a code or detect a signal transmitted by the capsule-holder 2 in order to detect the presence of the capsule-holder 2 within the aperture of the extraction head 16.

As previously described, in a preferred embodiment the capsule-holder is equipped with at least one electromagnet 61. Hence, when the electromagnet 61 is active, the capsule-holder 2 inserted into the main assembly 1 is attracted to the magnet 63 which may be provided at the rear wall of the aperture of the extraction head 16.

In the insertion position of the capsule-holder 2 in the aperture of the extraction head 16, a magnetic attraction of the electro-magnet 61 and the magnet 63 is established whereby the capsule-holder 30 comes into contact with the rear wall of the aperture. Contact may be established directly between electro-magnet 61 and the magnet 63 or indirectly through a physical engagement of surfaces of the capsule-holder 30 the aperture, as a result of the creation of the magnetic field. Therefore, a correct position of the capsule-holder within the capsule-holder receiving aperture of the extraction head can be assured.

In particular, the decoding means 64 provided in the main assembly 1 may be a Reed-sensor designed to detect a magnetic field or any other equivalent electrical or electronic switch operated by an applied magnetic field.

The presence of a capsule-holder 2 equipped with the electromagnet 61 can therefore be detected by the decoding means 64.

As the decoding means 64 are connected to control means (not shown) of the beverage preparation machine, the operation of the beverage preparation machine can be controlled depending on the information supplied by the decoding means 1 to the control means. For example, when the presence of the capsule-holder inside the aperture of the main assembly 1 is detected by the decoding means 64, the control means may enable the operation of the pump 13 (not shown in Figure 5) and the heater 12 (not shown in Figure 5).

If no magnetic field is detected, the absence of the capsule holder 2 is assumed and the pump 13 cannot be operated.

This feature is known in the prior art beverage preparation machines, but uses a permanent magnet in the capsule holder. By using an electromagnet, or any other device able to generate a controlled magnetic field or to move a magnetic field inside or outside a spatial detection range, it is thus possible to control the operation of the beverage preparation machine (in particular of its pump), either by enabling its operation by generating a magnetic field by activating the electro-magnet 61, or impairing it by stopping the generation of a magnetic field. In other words, when the electromagnet 61 is not active (or, when a permanent magnet 65 is in such a position that it is not detected), the beverage preparation machine reacts as if the capsule holder 2 is absent or not properly inserted, and impairs or stops the fluid pump and thus the beverage delivery.

It is therefore made possible to stop the beverage delivery in a simple an efficient way when it is determined that a desired predefined (e.g. using the system shown on Figure 4) quantity of beverage has been delivered.

This also makes it possible to transform in a very simple way a prior art beverage preparation machine configured for a manual stop of beverage delivery into a beverage preparation machine providing an automatic stop of beverage delivery.

Indeed, if the prior art machine is provided with a system for detecting the presence of the capsule holder and to stop fluid delivery if it determines that the capsule holder is absent, the prior art capsule holder is replaced by a capsule holder configured to make the system for detecting if the capsule holder is present or absent believe that the capsule holder is absent when the flow meter determines that the desired given fluid quantity (i.e. the predefined fluid quantity) has been delivered. In other words, the sensor provided in the prior art machine is deceived (the capsule holder is still in right position, but no more detected) in order to stop fluid delivery.

The method for transforming a beverage preparation machine configured for a manual stop of beverage delivery into a beverage preparation machine providing an automatic stop of beverage delivery may comprise the steps of:
▪ providing a beverage preparation machine configured for a manual stop of beverage delivery, said the beverage preparation machine comprising a system for detecting if the capsule holder is present or absent and being configured to stop fluid delivery if it determines that the capsule holder is absent,
▪ replacing the capsule holder of said beverage preparation machine configured for a manual stop of beverage delivery by a replacement capsule holder configured to make the system for detecting if the capsule holder is present or absent believe that it is absent upon determination that a predefined fluid quantity has been delivered, thus stopping fluid delivery.

If a flow meter is not provided with the replacement capsule holder, which, in this case, comprises a module for receiving data from an external flow meter assembly, the method may further comprise replacing the fluid tank of the beverage preparation machine by a fluid tank comprising a flow meter assembly configured to wirelessly communicate with the reception module of the capsule holder.

It should be understood that various changes and modifications to the presently preferred embodiments described herein will be apparent to those skilled in the art. Such changes and modifications can be made without departing from the scope of the present invention covered by the appended claims.

For example, the operating parameter of the beverage preparation machine defined based on the detected state of the variable element of the capsule holder may be of many type, for example: the operation of a fluid pump as previously described, the operation or the power output of a fluid heater, the injection pressure of the fluid, etc.

## Claims

1. A capsule holder (2) for a beverage preparation machine, said capsule holder (2) comprising a cavity for receiving an ingredient capsule (3) for beverage preparation, the capsule holder (2) comprising communication means (6) for communicating with a main assembly (1) of a beverage preparation machine adapted to receive said capsule holder (2), the communication means having a variable element, and the capsule holder (2) comprising electronic circuitry configured to set a state of said variable element, **characterized in that** it further comprises a flow meter (4) which is an optical sensor configured to detect the width of a fluid flow at an outlet (22) of the capsule holder.

2. The capsule holder according to claim 1, wherein the variable element is a position or an intensity of a magnetic field, the communication means comprising either:
- a movable permanent magnet (65) and an actuator configured to move said permanent magnet; or
- an electromagnet (61) whose excitation generates a magnetic field.

3. The capsule holder (2) according to claim 1, wherein the variable element of the communication means (6) comprises a mobile mechanical piece, the position of said mobile mechanical piece defining its state.

4. The capsule holder (2) according to any one of claims 1 to 3, wherein said capsule holder (2) comprises a reception module configured to receive data from an external flow-meter assembly.

5. The capsule holder according to any one of the preceding claims, wherein the electronic circuitry is configured to change the state of the variable element upon reception of a signal that a predefined fluid quantity has been delivered.

6. The capsule holder according to any one of the preceding claims, wherein said capsule holder comprises one of a scrolling wheel, a capacitive button or buttons, or a mechanical button for manually adjusting a fluid quantity to be delivered.

7. A beverage preparation machine having at least one operating parameter and comprising a main assembly (1) and a capsule holder (2), wherein the main assembly (1) comprises a sensor for detecting the state of the variable element of the communication means of the capsule holder (2) and wherein the main assembly (1) is configured to set an operating parameter based on said state of the variable element, wherein at least one state of the variable element causes the same output from the sensor as an absence of the capsule holder (2), wherein the set operating parameter is the operation of a fluid pump (13) for fluid injection into the capsule holder (2), and wherein the beverage preparation machine is configured to stop the operation of the fluid pump (13) upon detection of a given state of the variable element, wherein said beverage preparation machine is configured to stop the operation of the fluid pump (13) upon detection of the absence of the capsule holder, **characterized in that** the capsule holder is according to claim 3, wherein the main assembly comprises a light source and an optical sensor, wherein the mobile mechanical piece of the capsule holder is a light reflector configured to reflect light from the light source to the light sensor in a first state and impairs transmission of light from the light source to the sensor in a second state causing the same output from the sensor as an absence of the capsule holder (2).

8. A beverage preparation machine according to claim 7, wherein the capsule holder (2) is according to claim 6, wherein an external flow meter assembly is comprised in a fluid tank (151) of the beverage preparation machine.

## Patentansprüche

1. Kapselhalter (2) für eine Getränkezubereitungsmaschine, wobei der Kapselhalter (2) einen Hohlraum zum Aufnehmen einer Zutatenkapsel (3) für die Getränkezubereitung umfasst, der Kapselhalter (2) Kommunikationsmittel (6) zum Kommunizieren mit einer Hauptbaueinheit (1) einer Getränkezubereitungsmaschine, die geeignet ist, den Kapselhalter (2) aufzunehmen, umfasst, wobei die Kommunikationsmittel ein variables Element aufweisen, und der Kapselhalter (2) elektronische Schaltungen umfasst, die dafür eingerichtet sind, einen Zustand des variablen Elements festzusetzen, **dadurch gekennzeichnet, dass** er ferner einen Durchflussmesser (4) umfasst, der ein optischer Sensor ist, der dafür eingerichtet ist, die Breite eines Fluidstroms an einem Auslass (22) des Kapselhalters zu erfassen.

2. Kapselhalter nach Anspruch 1, wobei das variable Element eine Position oder eine Intensität eines Magnetfeldes ist und die Kommunikationsmittel entweder
- einen beweglichen Permanentmagneten (65) und einen Aktuator, der dafür eingerichtet ist, den Permanentmagneten zu bewegen; oder
- einen Elektromagneten (61), dessen Erregung ein Magnetfeld erzeugt, umfassen.

3. Kapselhalter (2) nach Anspruch 1, wobei das variable Element der Kommunikationsmittel (6) ein bewegliches mechanisches Teil umfasst, wobei die Position des mobilen mechanischen Teils seinen Zustand definiert.

4. Kapselhalter (2) nach einem der Ansprüche 1 bis 3, wobei der Kapselhalter (2) ein Empfangsmodul umfasst, das dafür eingerichtet ist, Daten von einer externen Durchflussmesseranordnung zu empfangen.

5. Kapselhalter nach einem der vorhergehenden Ansprüche, wobei die elektronischen Schaltungen dafür eingerichtet sind, bei Empfang eines Signals, dass eine vordefinierte Fluidmenge abgegeben wurde, den Zustand des variablen Elements zu ändern.

6. Kapselhalter nach einem der vorhergehenden Ansprüche, wobei der Kapselhalter eines/eine von einem Scroll-Rad, einer kapazitiven Taste oder kapazitiven Tasten oder einer mechanischen Taste zum manuellen Einstellen einer abzugebenden Fluidmenge umfasst.

7. Getränkezubereitungsmaschine, die mindestens eine Betriebsparameter aufweist und eine Hauptbaueinheit (1) und einen Kapselhalter (2) umfasst, wobei die Hauptbaueinheit (1) einen Sensor zum Erfassen des Zustandes des variablen Elements der Kommunikationsmittel des Kapselhalters (2) umfasst und wobei die Hauptbaueinheit (1) dafür eingerichtet ist, einen Betriebsparameter basierend auf dem Zustand des variablen Elements festzusetzen, wobei mindestens ein Zustand des variablen Elements die gleiche Ausgabe von dem Sensor wie eine Abwesenheit des Kapselhalters (2) bewirkt, wobei der festgesetzte Betriebsparameter der Betrieb einer Fluidpumpe (13) zur Fluideinspritzung in den Kapselhalter (2) ist und wobei die Getränkezubereitungsmaschine dafür eingerichtet ist, bei Erfassung eines vorgegebenen Zustandes des variablen Elements den Betrieb der Fluidpumpe (13) zu stoppen, wobei die Getränkezubereitungsmaschine dafür eingerichtet ist, den Betrieb der Fluidpumpe (13) bei Erfassung der Abwesenheit des Kapselhalters zu stoppen, **dadurch gekennzeichnet, dass** der Kapselhalter nach Anspruch 3 beschaffen ist, wobei die Hauptbaueinheit eine Lichtquelle und einen optischen Sensor umfasst, wobei das bewegliche mechanische Teil des Kapselhalters ein Lichtreflektor ist, der dafür eingerichtet ist, in einem ersten Zustand Licht von der Lichtquelle zum Lichtsensor zu reflektieren, und in einem zweiten Zustand die Übertragung von Licht zum Sensor beeinträchtigt, sodass die gleiche Ausgabe von dem Sensor wie bei einer Abwesenheit des Kapselhalters (2) bewirkt wird.

8. Getränkezubereitungsmaschine nach Anspruch 7, wobei der Kapselhalter (2) nach Anspruch 6 beschaffen ist, wobei eine externe Durchflussmesseranordnung in einem Fluidvorratsbehälter (151) der Getränkezubereitungsmaschine enthalten ist.

## Revendications

1. Porte-capsule (2) pour une machine de préparation de boisson, ledit porte-capsule (2) comprenant une cavité pour recevoir une capsule d'ingrédient (3) pour une préparation de boisson, le porte-capsule (2) comprenant un moyen de communication (6) pour communiquer avec un ensemble principal (1) d'une machine de préparation de boisson conçue pour recevoir ledit porte-capsule (2), le moyen de communication ayant un élément variable, et le porte-capsule (2) comprenant un circuit électronique configuré pour définir un état dudit élément variable, **caractérisé en ce qu'**il comprend en outre un débitmètre (4) qui est un capteur optique configuré pour détecter la largeur d'un écoulement de fluide au niveau d'une sortie (22) du porte-capsule.

2. Porte-capsule selon la revendication 1, dans lequel l'élément variable est une position ou une intensité d'un champ magnétique, le moyen de communication comprenant soit :
- un aimant permanent mobile (65) et un actionneur configuré pour déplacer ledit aimant permanent ; ou
- un électroaimant (61) dont l'excitation génère un champ magnétique.

3. Porte-capsule (2) selon la revendication 1, dans lequel l'élément variable du moyen de communication (6) comprend une pièce mécanique mobile, la position de ladite pièce mécanique mobile définissant son état.

4. Porte-capsule (2) selon l'une quelconque des revendications 1 à 3, dans lequel ledit porte-capsule (2) comprend un module de réception configuré pour recevoir des données depuis un ensemble débitmètre externe.

5. Porte-capsule selon l'une quelconque des revendications précédentes, dans lequel le circuit électronique est configuré pour changer l'état de l'élément variable à la réception d'un signal indiquant qu'une quantité de fluide prédéfinie a été distribuée.

6. Porte-capsule selon l'une quelconque des revendications précédentes, dans lequel ledit porte-capsule comprend l'un parmi une roulette de défilement, un bouton ou des boutons capacitif(s), ou un bouton mécanique pour ajuster manuellement une quantité de fluide à distribuer.

7. Machine de préparation de boisson ayant au moins un paramètre opérationnel et comprenant un ensemble principal (1) et un porte-capsule (2), dans laquelle l'ensemble principal (1) comprend un capteur pour détecter l'état de l'élément variable du moyen de communication du porte-capsule (2) et dans laquelle l'ensemble principal (1) est configuré pour définir un paramètre opérationnel sur la base dudit état de l'élément variable, dans laquelle au moins un état de l'élément variable amène la même sortie par le capteur qu'une absence du porte-capsule (2), dans laquelle le paramètre opérationnel défini est le fonctionnement d'une pompe à fluide (13) pour injection de fluide dans le porte-capsule (2), et dans laquelle la machine de préparation de boisson est configurée pour arrêter le fonctionnement de la pompe à fluide (13) lors d'une détection d'un état donné de l'élément variable, dans laquelle ladite machine de préparation de boisson est configurée pour arrêter le fonctionnement de la pompe à fluide (13) lors d'une détection de l'absence du porte-capsule, **caractérisée en ce que** le porte-capsule est selon la revendication 3, dans laquelle l'ensemble principal comprend une source de lumière et un capteur optique, dans laquelle la pièce mécanique mobile du porte-capsule est un réflecteur de lumière configuré pour réfléchir la lumière provenant de la source de lumière vers le capteur de lumière dans un premier état et entrave la transmission de lumière depuis la source de lumière vers le capteur dans un deuxième état amenant la même sortie par le capteur qu'une absence du porte-capsule (2).

8. Machine de préparation de boisson selon la revendication 7, dans laquelle le porte-capsule (2) est selon la revendication 6, dans laquelle un ensemble débitmètre externe est compris dans un réservoir de fluide (151) de la machine de préparation de boisson.
